**Europäisches Patentamt**

**European Patent Office**

**Office européen des brevets**

(11) Veröffentlichungsnummer: **0 158 313**
A2

# (12) EUROPÄISCHE PATENTANMELDUNG

(21) Anmeldenummer: 85104267.1

(22) Anmeldetag: 09.04.85

(51) Int. Cl.⁴: **A 01 B 37/00**

(30) Priorität: 10.04.84 DE 3413517

(43) Veröffentlichungstag der Anmeldung:
16.10.85 Patentblatt 85/42

(84) Benannte Vertragsstaaten:
AT BE CH FR IT LI NL

(71) Anmelder: Johann Gassner K.G.
Post Grosshelfendorf
D-8011 Göggenhofen(DE)

(72) Erfinder: Gassner, Johann
Haus Nr. 10
D-8011 Göggenhofen(DE)

(72) Erfinder: Niedermeir, Franz
Hauptstrasse 8
D-8086 Grunertshofen(DE)

(74) Vertreter: Lamprecht, Helmut, Dipl.-Ing.
Corneliusstrasse 42
D-8000 München 5(DE)

(54) Vorrichtung zur Lockerung des Untergrunds für landwirtschaftliche Fahrzeuge und fahrbare Geräte.

(57) Eine zum Anbau an landwirtschaftliche Fahrzeuge und fahrbare Geräte geeignete Vorrichtung zur Lockerung des Untergrunds, bei welcher der Abstand der Halterungen zum Anschluß an das Fahrzeug oder Gerät veränderbar ist und bei dem mindestens zwei auf jede Fahrspur einstellbare Untergrundlockerer vorgesehen sind, die zwischen einer angehobenen Ruhestellung und einer abgesenkten Arbeitsstellung beweglich sind.

FIG.1

EP 0 158 313 A2

Vorrichtung zur Lockerung des Untergrunds für landwirtschaftliche Fahrzeuge und fahrbare Geräte.

Die Erfindung betrifft eine Vorrichtung zur Lockerung des Untergrunds für landwirtschaftliche Fahrzeuge und fahrbare Geräte mit einem in der Fahrspur anzuordnenden, an einem Träger befestigten Untergrundlockerer.

Die fortschreitende Mechanisierung der Landwirtschaft und insbesondere der Einsatz immer stärkerer und damit schwererer Schlepper hat zu einer die Ernteerträge negativ beeinflussenden Bodenverdichtung geführt. Die verdichteten Bodenschichten stören den Luft- und Wasserhaushalt und beeinträchtigen zumindest bei bestimmten Pflanzenarten auch das Wurzelwachstum.

Das Problem ist bekannt. Zu seiner Bewältigung ist es bekannt, an landwirtschaftliche Geräte sog. Spurlockerer anzubauen, die als hakenförmige Federstahlstreifen ausgebildet sind und vom gezogenen Gerät aus den Boden rinnenartig außreißen. Die Spurlockerer werden am Gerät so angebracht, daß sie sich in der Spur der Räder des Schleppers bewegen und somit den vom Schleppergewicht verdichteten Boden lockern.

Diese bekannten Spurlockerer müssen an jedem Gerät gesondert angebracht werden und beim Wechsel des Zugfahrzeugs muß gegebenenfalls der Abstand der am Gerät befindlichen Spurlockerer der veränderten Spurweite des neuen Zugfahrzeugs angepaßt werden. Es besteht demnach ein hoher Material- und gegebenenfalls auch Arbeitsaufwand. Außerdem reißen diese Spurlockerer eine tiefe Rinne, die die Austrocknung des Bodens beschleunigen kann.

Der Erfindung liegt die Aufgabe zugrunde, eine wirksame Lockerung des durch die Räder von Fahrzeugen oder schweren Geräten, wie z.B. Güllefässern, unerwünscht verdichteten Bodens zu erreichen, ohne dabei alle von dem die Bodenverdichtung verursachenden Radfahrzeug, meist einem Schlepper, gezogenen Geräte besonders ausrüsten und gegebenenfalls entsprechend der Spurweite des ziehenden Fahrzeugs umrüsten zu müssen. Dabei soll außerdem die Möglichkeit zu einer wirksamen, jedoch den Feuchtigkeitshaushalt schonenden Bodenlockerung gegeben sein.

Die Lösung dieser Aufgabe besteht nach der Erfindung darin, daß an einem Träger zwei in ihrem Abstand voneinander veränderbare Halterungen zur Verbindung mit einem Fahrzeug bzw. Gerät und zwei in ihrem Abstand voneinander einstellbare, jeweils zwischen einer abgesenkten Arbeitsstellung und einer angehobenen Ruhestellung bewegliche Untergrundlockerer angebracht sind.

Eine solche Vorrichtung kann mit dem die Verdichtung verursachenden Radfahrzeug bzw. Gerät verbunden werden, wobei durch die im Abstand veränderbare Anordnung der Halterungen die Anpassung an unterschiedliche Unterlenkernormen von Schleppern jederzeit möglich ist. Damit entfällt die Notwendigkeit, die geschleppten Geräte einzeln mit Untergrundlockerern auszurüsten. Durch die Möglichkeit, den Abstand der Untergrundlockerer einzustellen, kann die jeweils vorhandene Spurweite der die Verdichtung verursachenden Räder berücksichtigt werden. Die Möglichkeit, die Untergrundlockerer in eine Ruhestellung anzuheben, ermöglicht erst die dauernde Verbindung mit den Unterlenkern der Aushubvorrichtung eines Schleppers, weil damit das Absenken der Unterlenker beim Kupplungsvorgang mit zu schleppenden oder zu tragenden Geräten nicht behindert wird. Außerdem wird dadurch auch die dauernde Verbindung mit einem schweren Gerät, wie z.B. einem Güllefaß, möglich, weil die Untergrundlockerer für den Straßentransport angehoben werden können.

Damit die Anpassung an unterschiedliche Geräte bzw. die für unterschiedliche Geräte gegebenenfalls unterschiedliche Höhenlage der Unterlenker der Aushubvorrichtung eines Schleppers möglich ist, besteht eine vorteilhafte Ausgestaltung darin, daß der vertikale Abstand des in Arbeitsstellung dem Boden zugewandten Arbeitsendes des Untergrundlockerers vom Träger einstellbar ist.

Vorzugsweise weisen die Untergrundlockerer am Arbeitsende eine flache Schar auf, welche in Arbeitsstellung leicht entgegen der Arbeitsrichtung und quer zu dieser ansteigt. Dadurch wird die obere Bodenschicht zur Lokkerung angehoben, ohne daß ein zu Feuchtigkeitsverlusten führender Schlitz senkrecht in den Boden gerissen wird.

Da mit der je nach anzubauendem Gerätetyp unterschiedlichen Höhenlage der Unterlenker der Anstellwinkel der Schar verändert wird, besteht eine weitere zweckmäßige Ausgestaltung darin, daß das in Arbeitsstellung dem Boden zugewandte Arbeitsende des Untergrundlockerers um eine in Arbeitsstellung quer zur Arbeitsrichtung verlaufende Achse einstellbar ist.

Dabei ist es besonders vorteilhaft, wenn der Untergrundlockerer in seiner Winkelstellung in Bezug auf die quer zur Arbeitsrichtung verlaufende Achse durch eine Abschersicherung festlegbar ist, weil dadurch bei großem Widerstand, z.B. beim Auftreffen auf einen Stein, der Untergrundlockerer nach hinten ausschwenken kann und die Bruchgefahr vermieden wird. Eine weitere, bevorzugte Ausführungsform ist es dabei, daß der Schwenkbereich des Untergrundlockerers um die quer zur Fahrtrichtung verlaufende Achse in Arbeitsrichtung begrenzt ist. Dadurch wird einerseits eine Veränderung des Anstellwinkels nicht behindert, andererseits wird aber sichergestellt, daß bei Rückwärtsfahrt nicht etwa der Untergrundlockerer soweit nach vorn verschwenkt wird, daß er die Fahrzeugreifen beschädigen kann.

Noch eine besonders vorteilhafte Ausgestaltung besteht darin, daß die beiden Untergrundlockerer hinsichtlich ihrer Beweglichkeit zwischen Arbeits- und Ruhestellung zu gegenläufiger Bewegung kuppelbar sind, wobei beim Anbau an ein einen Drehpflug tragendes Zugfahrzeug vorzugsweise die Kupplungsverbindung zwischen den beiden Untergrundlockerern mit dem drehbaren Pflugteil verbunden ist. Es kann somit automatisch nur die im gepflügten Bereich verlaufende Spur gelockert werden, während in dem zu pflügenden Bereich der Untergrundlockerer ausgehoben ist, so daß sich Stroh, Gestrüpp und Wurzelwerk nicht im Untergrundlockerer verfangen kann.

Eine weitere zweckmäßige Ausbildung besteht darin, daß der Träger ein Mittelstück aus zwei in Längsrichtung gegeneinander beweglich geführten Teilen besitzt, an deren voneinander abgewandten Enden die Halterungen und die Untergrundlockerer angebracht sind. Damit kann sich der Träger selbstätig auf den Abstand der Anschlußpunkte am Fahrzeug bzw. Gerät einstellen.

Weitere vorteilhafte und zweckmäßige Ausgestaltungen ergeben sich aus den Unteransprüchen in Verbindung mit der Beschreibung.

Anhand der nun folgenden Beschreibung der in der Zeichnung dargestellten Ausführungsbeispiele der Erfindung wird diese näher erläutert.

Es zeigt:

Fig. 1    in perspektivischer Darstellung die linke Hälfte einer in beiden Hälften symmetrisch ausgebildeten, erfindungsgemäßen Vorrichtung,

Fig. 2    einen Querschnitt durch die in Fig. 1 gezeigte Vorrichtung im Bereich der Verbindung des Untergrundlockerers mit dem Träger,

Fig. 3    eine Variante dieser Verbindung in perspektivischer Darstellung,

Fig. 4    einen der Fig. 2 entsprechenden Schnitt durch diese Variante bei abgenommenem Hebel,

Fig. 5    eine schematische Ansicht von hinten auf die gesamte Vorrichtung,

Fig. 6    eine Ansicht von hinten auf das linke Ende
          einer weiteren Variante,

Fig. 7    eine Seitenansicht dazu und

Fig. 8    eine Draufsicht auf diese Variante.


Die beispielsweise beschriebenen Vorrichtungen sind derart ausgebildet, daß sie mit den Unterlenkern der Hubeinrichtung eines Ackerschleppers derart verbunden werden können, daß sie auf Dauer an den Unterlenkern verbleiben können und insbesondere die Verbindung des Schleppers mit Anbau- oder Aufsattelgeräten nicht behindern. Es ist ersichtlich, daß sich die Vorrichtungen aber auch zum Anbau an andere Fahrzeuge oder fahrbare Geräte eignen, wozu es z.B. nur erforderlich ist, an dem Fahrzeug oder Gerät zwei den Unterlenkerhaken entsprechende Flansche vorzusehen, welche eine Bohrung für einen Befestigungsbolzen und eine untere Kante aufweisen, an der sich die Vorrichtung abstützen kann. Es besteht aber auch die Möglichkeit, ohne Abweichung von der Grundidee, die Halterung den jeweils anzutreffenden Verhältnissen anzupassen.


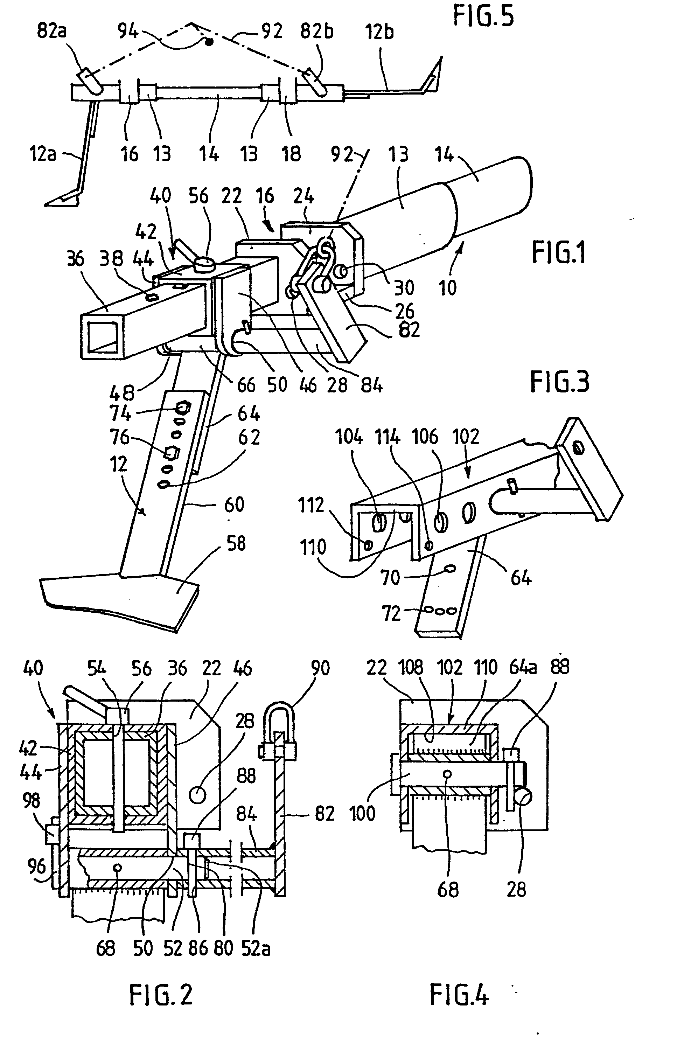

Bei der in den Fig. 1 und 2 gezeigten Vorrichtung besitzt einen insgesamt mit 10 bezeichneten Träger für vorzugsweise zwei Untergrundlockerer 12, von denen in Fig. 1 nur der linke Untergrundlockerer gezeigt ist, der - wie nachfolgend noch erläutert wird - auf die Spur des linken Schlepperrades eingestellt ist. Die Fig. 2 zeigt schematisch auch die Anordnung des rechten Spurlockerers.

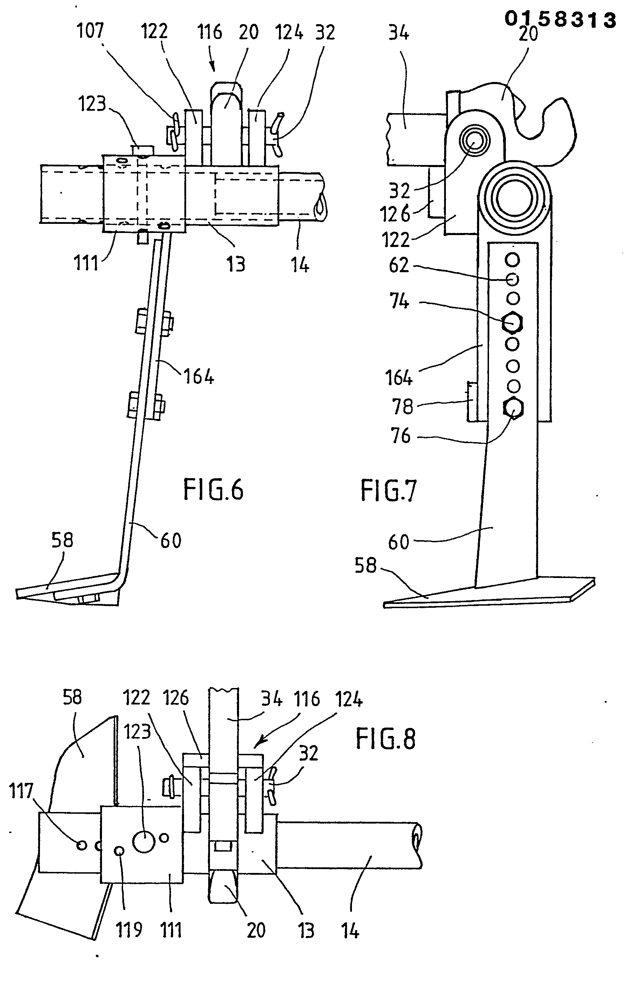

Der Träger 10 besteht in seinem mittleren Teil aus zwei teleskopartig ineinander verschiebbar geführten Rohren 13 und 14, durch welche der Träger 10 auf die sog. Unterlenkernorm einstellbar ist. Beiderseits dieses längenveränderlichen Mittelbereichs befinden sich Halterungen 16 und 18 (Fig. 5).

Wie in Fig. 1 gezeigt ist, schließt sich an die linke Halterung 16 ein fest mit der Halterung 16 verbundener Rohrstutzen 13 an, in den ein seinem Innendurchmesser angepaßtes Rohr 14 verschiebbar eingreift. Die rechte Halterung 18 kann nun entweder mit diesem Rohr 14 fest verbunden sein, wodurch sich zwei nicht austauschbare, unterschiedliche rechte und linke Baugruppen ergeben, oder es kann auch die rechte Baugruppe einen Rohrstutzen 13 aufweisen, wobei dann das Rohr 14 in beide Rohrstutzen 13 eingreift, wie dies in Fig. 5 gezeigt ist. Das Rohr 14 kann in einem der beiden Rohrstutzen 13 z.B. durch einen Bolzen unbeweglich festgelegt sein.

Die Halterungen 16 und 18 bestehen jeweils aus zwei zueinander parallelen, vertikal angeordneten, zwischen sich einen Abstand zur Aufnahme eines Unterlenkerhakens 20 (Fig. 6 - 8) aufweisenden Platten 22 und 24, die an ihrem unteren Rand durch eine horizontale Platte 26 zu einem insgesamt U-förmigen Gebilde ergänzt sind. In den beiden Platten 22 und 24 sind miteinander fluchtende Bohrungen 28 und 30 vorgesehen, die geeignet sind, einen Bolzen 32 (Fig. 6 - 8) aufzunehmen, der eine Befestigungsbohrung im Unterlenkerhaken 20 durchqueren kann. Dabei ist die Anordnung so getroffen, daß die Platte 26 von unten am Unterlenker 34 (Fig. 6 - 8) anliegt, wenn der Bolzen 32 die Bohrungen 28 und 30 und den Unterlenkerhaken 20 durchquert, so daß dadurch der Träger 10 fest positioniert und an einer Drehung um seine Längsachse gehindert ist.

An die außenliegende Platte 22 schließt sich etwa in Verlängerung des Rohrstutzens 13 ein Vierkantrohr 36 an, das mit einer Gruppe von in gleichmäßigen Abständen angeordneten vertikalen Bohrungen 38 versehen ist. Auf dem Vierkantrohr 36 ist längsverschieblich ein Lagersattel 40 für den Untergrundlockerer 12 angebracht. Dieser Lagersattel besteht bei dem Ausführungsbeispiel nach den Fig. 1 und 2 aus einem das Vierkantrohr 36 umschließenden Abschnitt 42 eines Vierkantrohrs, an dem seitlich zwei Lagerwangen 44 und 46 angebracht sind, die nach unten über den Abschnitt 42 hervorstehen und in diesem unteren Bereich miteinander fluchtende Bohrungen 48 und 50 für einen Lagerbolzen 52 aufweisen. Der Lagersattel 40 wird von einer vertikalen Bohrung 54 durchzogen, welche zu einer der Bohrungen 38 ausgerichtet werden kann, so daß durch einen die Bohrungen 54 und 38 durchquerenden Steckbolzen 56 die seitliche Position des Lagersattels 40 festgelegt werden kann, um den Untergrundlockerer 12 gegenüber der Radspur des ihn tragenden Fahrzeugs bzw. Geräts auszurichten.

Der Untergrundlockerer 12 besteht aus einer flachen Schar 58, die leicht entgegen der Fahrtrichtung und quer zu dieser ansteigend verläuft, wenn sich der Untergrundlockerer 12 in Arbeitsstellung befindet.

Dadurch wird der Boden durch Anheben und Zurückfallen aufgelockert und nicht durch Aufreißen einer tiefen Rinne. Die Schar 58 ist an einem durch ein Flacheisen gebildeten Arm 60 befestigt, der eine in seiner Längsrichtung ausgerichtete Gruppe von mit gleichmäßigen Abständen angeordneten Bohrungen 62 aufweist. Diesem Arm 60 ist ein Lagerarm 64 zugeordnet, der an seinem einen Ende eine Lagerhülse 66 trägt, die zwischen die beiden Lagerwangen 44 und 46 eingesetzt ist und vom Lagerbolzen 52 durchquert wird. Der Lagerbolzen 52 und die Lagerhülse 66 sind durch einen Stift 68 drehfest miteinander verbunden.

Der Lagerarm 64 ist mit einer Bohrung 70 und mit grösserem radialen Abstand vom Lagerbolzen 52 mit einer Gruppe von Bohrungen 72 versehen, wobei die Bohrungen 72 konzentrisch zur Bohrung 70 angeordnet sind. Der Arm 60 wird durch zwei Schrauben 74 und 76, die zwei der Bohrungen 62, sowie die Bohrung 70 und eine der Bohrungen 72 durchqueren, am Lagerarm 64 befestigt. Da die Bohrungen 72 konzentrisch zur Bohrung 70 angeordnet sind, kann durch Auswahl einer der Bohrungen 72 der Anstellwinkel der Schar 58 verändert, insbesondere z.B. der durch ein jeweils von den Unterlenkern zu tragendes Gerät verursachten, unterschiedlichen Unterlenkerstellung angepaßt werden. Die eine der Bohrungen 72 durchquerende Schraube 76 kann als Abscherschraube ausgebildet sein, so daß bei einem sehr starken Widerstand durch Abscheren der Schraube 76 der Spurlockerer um die Schraube 74 nach hinten verschwenkt werden kann,

um Beschädigungen zu vermeiden. Damit nicht etwa beim Rückwärtsfahren nach dem Abscheren der Schraube 76 der Spurlockerer 12 nach vorn verschwenkt wird und die Reifen des Fahrzeugs beschädigt, ist die Bewegung um die Schraube 74 nach vorn durch einen Sicherheitsanschlag 78 (Fig. 7) begrenzt.

Der Lagerbolzen 52 ragt vorzugsweise auf der vom Schlepper abgewandten Seite aus der Lagerwange 46 hervor und der vorstehende Abschnitt 52a ist mit einer diametralen Bohrung 80 versehen. Ein Hebel 82 mit einer Achshülse 84 kann auf den Abschnitt 52a aufgesteckt und durch einen eine Bohrung 86 der Achshülse 84 und die Bohrung 80 durchquerenden Stift 88 drehfest mit dem Lagerbolzen 52 und damit mit dem Bodenlockerer 12 verbunden werden. An seinem freien Ende kann der Hebel 82 z.B. über ein Schäkel 90 mit einem Zugglied 92 (Fig. 5), z.B. einer Kette, verbunden werden, das mit seinem anderen Ende an einem gleichartigen, mit dem rechten Bodenlockerer 12 verbundenen Hebel 82 verbunden ist. Zum besseren Verständnis sind in Fig. 5 der rechte Bodenlockerer mit 12a und der rechte Hebel mit 82a, der linke Bodenlockerer dagegen mit 12b und der linke Hebel mit 82b bezeichnet.

Die Hebel 82 und das Zugglied 92 werden benutzt, wenn die Vorrichtung an einem Zugfahrzeug befestigt ist, das mit einem Drehpflug verbunden ist. In diesem Fall besteht einerseits keine Notwendigkeit, das noch von der Pflugschar umzubrechende Erdreich aufzulockern, andererseits besteht die Gefahr, daß Kraut. Stroh, Gestrüpp und dergl. mehr im Bodenlockerer hängen bleibt, der über das ungepflügte Erdreich geführt wird. Es wird deshalb das Zugglied 92 mit den Hebeln 82 angebracht und mit dem zwischen den beiden Arbeitsstellungen drehbaren Pflugrahmen an einer schematisch mit 94 bezeichneten Stelle verbunden, wobei sich der eine Untergrundlockerer, in Fig. 5 der linke Untergrundlockerer 12b, dem bereits gepflügten Bereich zugeordnet und in Arbeitsstellung abgesenkt ist, während der rechte Untergrundlockerer 12a dem ungepflügten Bereich zugeordnet und in seine Ruhestellung ausgehoben ist. Wird der Pflugrahmen gedreht, wird durch das Zugglied 92 der linke Untergrundlockerer 12b ausgehoben und in die Ruhestellung überführt, während der rechte Untergrundlockerer 12a unter dem Einfluß seines Gewichts in seine Arbeitsstellung absinken kann, wo er durch den Bodenwiderstand in den Boden gezogen wird, bis er in der in den Fig. 1, 2, 5 und 6 gezeigten Endstellung angelangt ist, in der der Lagerarm 64 und der Arm 60 noch um einen gewissen Winkel aus der vertikalen Richtung bezogen auf die Fahrzeugmitte nach außen verschwenkt sind. Dies hat auch den Vorteil, daß die Untergrundlockerer 12 nicht von Hand in ihre Ruhestellung angehoben werden müssen, bevor die Unterlenker 34 zum Anbau eines Geräts abgesenkt werden, weil beim Auftreffen auf den Boden die Untergrundlockerer 12 durch eine auswärts gerichtete Komponente des Bodenwiderstands angehoben bzw. in Richtung auf die Ruhestellung verschwenkt werden.

Die Bewegung in die Arbeitsstellung wird in der erwähnten Endstellung durch einen Anschlag begrenzt. Beim Beispiel

nach den Fig. 1 und 2 kann dieser Anschlag z.B. an der vom Hebel 82 abgewandten Lagerwange 44 angebracht sein, wobei der an der Außenseite dieser Lagerwange 44 anlie-, gende Kopf 96 des Lagerbolzens 52 als Anschlaghebel ausgebildet ist, der mit diesem Anschlag 98 zusammenwirkt. Der Kopf bzw. Anschlaghebel 96 kann mit einer Bohrung versehen sein, der an der Lagerwange 44 eine mit ihr in der Ruhestellung des Untergrundlockerers 12 fluchtende Bohrung zugeordnet ist, so daß durch Einstecken eines Stiftes der Untergrundlockerer 12 in seiner angehobenen Ruhestellung festgelegt werden kann.

Die Fig. 3 und 4 zeigen eine Variante zu der vorstehend beschriebenen Ausführungsform, bei welcher die konstruktiv aufwendige, aber sehr bequem zu bedienende Lagerung des Untergrundlockerers 12 über den Lagersattel 40 durch einen lösbaren Lagerbolzen 100 ersetzt wird, zu dessen Handhabung das Vierkantrohr 36 durch ein nach unten offenes U-Profil 102 ersetzt ist, dessen Schenkel von einer Reihe von mit gleichen Abständen voneinander angeordneten Lagerbohrungen 104 bzw. 106 durchquert werden. Der Lagerarm 64 wird gegenüber dem ausgewählten, der Spurbreite des Fahrzeugs entsprechenden Bohrungspaar 104, 106 ausgerichtet, dann wird der Lagerbolzen 100 eingeschoben und - sofern nicht ein Hebel 82 aufgesetzt werden soll - durch den Stift 88 gesichert. Schließlich wird noch durch den Stift 68 der Lagerarm 64 drehfest mit dem Lagerbolzen 100 verbunden, damit bei Bedarf der Hebel 82 seine Funktion ausüben kann.

Um die Schwenkbewegung des Untergrundlockerers 12 in der erwähnten Endstellung zu begrenzen, kann der Lagerarm 64 über die Lagerhülse 66 hinaus derart verlängert sein, daß der verlängerte Abschnitt 64a gegen die Innenfläche 108 des oberen Querstegs 110 des U-Profils 102 anschlägt, wenn der Untergrundlockerer 12 seine Endstellung erreicht. Diese Art der Bewegungsbeschränkung für den Untergrundlockerer 12 kann auch bei der Ausführungsform nach den Fig. 1 und 2 angewandt werden. Zu Feststellung des Untergrundlockerers 12 in der Ruhestellung kann in den seitlichen Schenkeln des U-Profils 102 ein Bohrungspaar 112, 114 vorgesehen sein, in das ein Bolzen eingesteckt werden kann, der den Untergrundlockerer 12 von unten abstützt, wenn er sich in Ruhestellung befindet.

Bei der in den Fig. 6 - 8 dargestellten Ausführungsform sind den Platten 22 und 24 entsprechende Platten 122 und 124 seitlich an dem gegenüber den vorstehend beschriebenen Beispielen länger ausgeführten Rohr 13 befestigt und anstelle der horizontalen Platte 26 ist auf der vom Rohr 13 abgewandten Schmalseite der Platten 122 und 124 eine vertikal angeordnete Platte 126 aufgesetzt. Die Platten 122 und 124 besitzen fluchtende Bohrungen zur Aufnahme des den Unterlenkerhaken 20 durchquerenden Bolzens 32, der durch eine Sicherung 107 festgelegt wird. Am oberen Ende des dem Lagerarm 64 entsprechenden Lagerarms 164 ist eine Lagerhülse 111 angeordnet, deren Innendurchmesser dem Außendurchmesser des Rohrs 13 angepaßt ist, so daß die Lagerhülse 111 auf dem Rohr 13 verschoben und verdreht werden kann, um den Untergrundlockerer 12 seitlich einstellen und den Anstellwinkel der Schar 58 verändern zu können. Zur Festlegung der ausgewählten Position des Untergrundlockerers 12 ist das Rohr 13 im Anschluß an die durch die Platten 122, 124 und 126 gebildete Halterung 116 mit einer Gruppe von in gleichmäßigen Abständen angeordneten diametralen Bohrungen 117 versehen, außerdem sind an der Lagerhülse 111 axial und im Winkel zueinander versetzte, diametrale Bohrungen 119 vorgesehen, so daß durch Auswahl der entsprechenden Paarungen der Untergrundlockerer 12 in einer Vielzahl von Stellungen durch einen Stift 123 festgelegt werden kann.

Es ist ersichtlich, daß bei allen Ausführungsvarianten sowohl rechts als auch links mehrere Untergrundlockerer 12 nebeneinander angeordnet werden können, insbesondere zwei einer Zwillingsbereifung zugeordnete Untergrundlockerer. Die zusätzlichen Untergrundlockerer 12 können einfach vom Ende her auf das Vierkantrohr 36 oder das Rohr 13 aufgeschoben oder von unten in das U-Profil 102 eingeschoben und durch einen weiteren Bolzen 52 befestigt werden.

In manchen Fällen kann es erwünscht sein, eine gründliche Bodenlockerung über die gesamte Fahrzeugbreite durchzuführen. Für solche Anwendungen können z.B. die Rohre 13 und 14 getrennt und dann zwischen die Halterungen 116 weitere mit der Hülse 111 versehene Untergrundlockerer 12 aufgeschoben werden, die durch entsprechende Bohrungen gesichert werden können, worauf die Rohre 13 und 14 wieder zusamengefügt werden. Ebenso kann man beim Beispiel nach den Fig. 1 und 2 die Rohre 13 und 14 durch ein Vierkantrohr zur Aufnahme weiterer Lagersättel 40 ersetzen oder beim Beispiel nach den Fig. 3 und 4 durch ein U-Profil.

Für manche Einsatzarten, z.B. beim Anbau an landwirtschaftliche, fahrbare Geräte, wie Güllefässer, kann es erwünscht sein, die Untergrundlockerer 12 vom Fahrersitz des Zugfahrzeugs aus anheben zu können, damit sie z.B. für den Straßentransport ihre Ruhestellung einnehmen. Hierzu kann z.B. eine vom Zugfahrzeug aus zu betätigende hydraulische Stellvorrichtung vorgesehen werden. Eine derartige Ergänzung stellt für den Fachmann kein Problem dar und ist deshalb nicht näher erläutert.

Ansprüche:

1. Vorrichtung zur Lockerung des Untergrunds für landwirtschaftliche Fahrzeuge und fahrbare Geräte mit einem in der Fahrspur anzuordnenden, an einem Träger befestigten Untergrundlockerer, dadurch gekennzeichnet, daß an einem Träger (10) zwei in ihrem Abstand voneinander veränderbare Halterungen (16, 18; 116) zur Verbindung mit einem Fahrzeug bzw. Gerät und zwei in ihrem Abstand voneinander einstellbare, jeweils zwischen einer abgesenkten Arbeitsstellung und einer angehobenen Ruhestellung bewegliche Untergrundlockerer (12) angebracht sind.

2. Vorrichtung nach Anspruch 1, dadurch gekennzeichnet, daß der vertikale Abstand des in der Arbeitsstellung dem Boden zugewandten Arbeitsendes (58) des Untergrundlockerers (12) vom Träger (10) einstellbar ist.

3. Vorrichtung nach einem der Ansprüche 1 oder 2, dadurch gekennzeichnet, daß die Untergrundlockerer (12) an ihrem Arbeitsende eine flache Schar (58) aufweisen, deren Scharfläche in Arbeitsstellung leicht entgegen der Arbeitsrichtung ansteigt.

4. Vorrichtung nach Anspruch 3, dadurch gekennzeichnet, daß das in Arbeitsstellung dem Boden zugewandte Arbeitsende (58) des Untergrundlockerers (12) um eine in Arbeitsstellung quer zur Arbeitsrichtung verlaufende Achse (74; 13) einstellbar ist.

5. Vorrichtung nach Anspruch 4, dadurch gekennzeichnet, daß der Untergrundlockerer (12) in seiner Winkelstellung in Bezug auf die quer zur Arbeitsrichtung verlaufende Achse (74) durch eine Abschersicherung (76) festlegbar ist.

6. Vorrichtung nach Anspruch 5, dadurch gekennzeichnet, daß der Schwenkbereich des Untergrundlockerers (12) um die quer zur Arbeitsrichtung verlaufende Achse (74) in Arbeitsrichtung begrenzt ist.

7. Vorrichtung nach einem der Ansprüche 1 bis 6, dadurchgekennzeichnet, daß die beiden Untergrundlockerer (12a, 12b) hinsichtlich ihrer Beweglichkeit zwischen Arbeits- und Ruhestellung zu gegenläufiger Bewegung kuppelbar sind.

8. Vorrichtung nach Anspruch 7 angebaut an ein einen Drehpflug bewegendes Fahrzeug, dadurch gekennzeichnet, daß die Kupplungsverbindung (82a, 82b, 92) zwischen den beiden Untergrundlockerern (12a, 12b) mit dem drehbaren Pflugteil (94) verbunden ist.

9. Vorrichtung nach einem der Ansprüche 1 bis 8, dadurch gekennzeichnet, daß der Träger (10) ein Mittelstück aus mindestens zwei in Längsrichtung gegeneinander beweglich geführten Teilen (13, 14) besitzt, an deren voneinander abgewandten Enden die Halterungen (16, 18; 116) und die Untergrundlockerer (12) angebracht sind.

1/2

0158313

FIG.5

FIG.1

FIG.3

FIG.2

FIG.4

FIG.6

FIG.7

FIG.8